# EUROPÄISCHE PATENTSCHRIFT

(11) **EP 2 669 068 B1**
(45) Veröffentlichungstag und Bekanntmachung des Hinweises auf die Patenterteilung: **31.08.2016**
(21) Anmeldenummer: 13167424.4
(22) Anmeldetag: 13.05.2013
(51) Int. Cl.: B29D 30/42, B29C 65/00, B29L 30/00, B29C 47/32, B29C 47/00

(54) **Verfahren zur Herstellung einer Mischungsbahn**
Method for producing a mixed sheet
Procédé de fabrication d'une bande de mélange

(30) Priorität: 31.05.2012 DE 102012104691
(43) Veröffentlichungstag der Anmeldung: 04.12.2013
(73) Patentinhaber: Continental Reifen Deutschland GmbH, 30165 Hannover (DE)
(72) Erfinder: Wahl, Günter, 31249 Hohenhameln (DE); Rodrigues, Pedro Nuno, 30165 Hannover (DE); Steiner, Frank, 30451 Hannover (DE)
(74) Vertreter: Widjaja, Wira

(56) Entgegenhaltungen:
- EP-A1- 0 753 391
- EP-A1- 2 327 536
- EP-A2- 1 634 690
- WO-A1-2008/077418
- GB-A- 777 734
- JP-A- 2000 351 145
- US-A- 4 256 522
- US-A- 5 173 138
- US-A1- 2003 136 498
- US-A1- 2009 145 532

## Beschreibung

Die Erfindung betrifft ein Verfahren zur Herstellung einer Mischungsbahn, insbesondere zur Herstellung eines Festigkeitsträger beinhaltenden Materialverbundes für eine Gürtellage oder eine Karkasslage eines Radialluftreifens, wobei sich die Mischungsbahn aus mehreren in ihrer Längsrichtung verlaufenden Mischungsstreifen zusammensetzt, wobei zumindest einer der Mischungsstreifen aus einer ersten Kautschukmischung und zumindest ein weiterer Mischungsstreifen aus einer zweiten Kautschukmischung besteht, wobei die erste Kautschukmischung und die zweite Kautschukmischung unterschiedliche Zusammensetzungen aufweisen. Alternativ betrifft die Erfindung ein Verfahren zur Herstellung einer Materialbahn zur Erstellung einer Materialverbundbahn für eine Gürtellage oder eine Karkasslage eines Radialluftreifens, aus zwei gleichen Mischungsbahnen und einer zwischen diesen befindlichen Festigkeitsträgerbahn, wobei die beiden Mischungsbahnen aus mehreren Mischungsstreifen bestehen, wobei zumindest einer der Mischungsstreifen aus einer ersten Kautschukmischung und zumindest ein weiterer Mischungsstreifen aus einer zweiten Kautschukmischung besteht, wobei die erste Kautschukmischung und die zweite Kautschukmischung unterschiedliche Zusammensetzungen aufweisen,

Aus der EP 2 327 536 A1 ist ein Verfahren zur Herstellung einer Festigkeitsträger beinhaltenden Materialverbundbahn aus zwei Mischungsbahnen bekannt. Jede Mischungsbahn besteht aus in ihrer Längsrichtung verlaufenden Mischungsstreifen, die durch Extrusion hergestellte und anschließend gewalzte Gummimischungen sind. Die Mischungsbahn wird quer oder unter einem spitzen Winkel zu ihrer Längserstreckung in gleich große Bahnstücke geschnitten. Die einzelnen Bahnstücke werden derart stumpf aneinander gespleißt, dass ihre vorherigen Schnittkanten die Längskanten der nun neuen Mischungsbahn bilden, welche mit einer zweiten übereinstimmend erstellten Mischungsbahn sowie der Festigkeitsträgerbahn durch Kalandrieren derart miteinander verbunden wird, dass gleiche Kautschukmischungen aufeinander positioniert werden. Anschließend wird die derart gebildete Materialverbundbahn in gleich große Stücke geschnitten, welche an ihren ungeschnittenen Kanten zu einer Bahn verbunden werden, in welcher die Mischungsstreifen wie in den ursprünglichen Mischungsbahnen verlaufen.

Ein Verfahren zur Herstellung einer Karkasslage ist aus der US 2009/145532 bekannt. Bei diesem Verfahren werden zwei Mischungsbahnen mit unterschiedlichen Breiten in Mischungsstreifen geschnitten, wobei aus der breiteren Mischungsbahn breitere Mischungsstreifen als aus der schmäleren Mischungsbahn hergestellt werden. Zum Aufbau eines bandförmigen Lagenelementes werden die Mischungsstreifen an ihren Seitenflächen verbunden.

Aus der WO 2008/077418 A1 ist es bekannt, zur Herstellung von Karkasslagen oder Gürtellagen von Fahrzeugluftreifen mit Festigkeitsträgern verstärkte, streifenförmige Elemente zu fertigen und zur betreffenden Verstärkungskomponente zusammenzufügen. Die US 4,256,522 A befasst sich mit einem Verfahren zur Herstellung einer Gewebebahn zur Verstärkung eines Bauteiles eines Fahrzeugluftreifens, wobei gleiche Abschnitte aus parallelen Fäden miteinander zu einem durchgehenden Gebilde verbunden werden. Auch die GB 777 734 A befasst sich mit einem Verfahren zu Herstellung eines Verstärkungsgewebes für einen Reifenbauteil.

Der Erfindung liegt die Aufgabe zugrunde, Mischungsbahnen aus Mischungsstreifen unterschiedlicher Kautschukmischungen auf eine besonders genaue und rationelle Weise herstellen zu können. Der Erfindung liegt ferner die Aufgabe zugrunde, einen Materialverbund bestehend aus zwei Mischungsbahnen und einer Festigkeitsträgerbahn mit einem geringeren Aufwand als jenem gemäß der EP 2 327 536 A1 herstellen zu können. Eine Mischungsbahn aus mehreren im rechten oder unter einem spitzen Winkel zu ihrer Längsrichtung verlaufenden Mischungsstreifen ist erfindungsgemäß nach Anspruch 1 derart herstellbar, dass eine erste Kautschukmischungsbahn aus der ersten Kautschukmischung und eine zweite Kautschukmischungsbahn gleicher Breite wie die erste Kautschukmischungsbahn aus der zweiten Kautschukmischung hergestellt werden, jede Kautschukmischungsbahn quer oder unter einem für beide Kautschukmischungsbahnen gleich großem spitzen Winkel zu ihrer Längserstreckung in gleich breite Mischungsstreifen geschnitten wird, wobei die Mischungsstreifenaus der ersten Kautschukmischungsbahn eine von der Breite der Mischungsstreifen aus der zweiten Kautschukmischungsbahn abweichende Breite aufweisen, wobei anschließend abwechselnd ein Mischungsstreifen aus der ersten Kautschukmischungsbahn mit einem Mischungsstreifen aus der zweiten *Kautschukmischungsbahn durch stumpfes Spleißen verbunden und derart die Mischungsstreifen* miteinander zur Mischungsbahn zusammengefügt werden.

Besonders rationell läuft dieses Verfahren dann ab, wenn die eine Kautschukmischungsbahn an der einen und die zweite Kautschukmischungsbahn an der zweiten Seite einer mittigen Fördereinrichtung zugeführt und die Mischungsstreifen geschnitten werden, welche anschließend auf der mittigen Fördereinrichtung positioniert und zusammengespleißt werden.

Die Materialbahn der eingangs genannten Art wird erfindungsgemäß nach Anspruch 3 derart hergestellt, dass die Festigkeitsträgerbahn abschnittsweise zwischen Abschnitten der beiden Mischungsbahnen eingefügt wird, welche im rechten Winkel oder unter einem spitzen Winkel zur Längserstreckung der Festigkeitsträgerbahn, die eine Mischungsbahn oberhalb, die andere unterhalb Festigkeitsträgerbahn, *überlappend* zugeführt werden, derart, dass die aus gleichen Mischungen bestehenden Mischungsstreifen der beiden Mischungsbahnen aufeinander liegen, wobei anschließend *der gebildete Überlappungsabschnitt* der beiden Mischungsbahnen seitlich der Festigkeitsträgerbahn *als Mischungsbahnabschnitt* abgeschnitten wird, *wobei anschließend die Festigkeitsträgerbahn so viel weiter transportiert wird, dass unmittelbar an den gebildeten Mischungsbahnabschnitt anschließend der nächste Mischungsbahnabschnitt gebildet wird, wobei die derart entstehende Bahn* aus *der mit den Mischungsbahnabschnitten belegten Festigkeitsträgerbahn zusammengepresst und gleichzeitig weitertransportiert wird..*

Die mit den Mischungsbahnabschnitten belegte Festigkeitsträgerbahn kann auf einem Mehrwalzen-Kalander oder dergleichen zur Materialbahn kalandriert werden.

Mit einer geringen Anzahl von rationell durchführbaren Verfahrensschritten entstehen gemäß der Erfindung Mischungsbahnen oder Materialbahnen zur Herstellung von Materialverbundbahnen. Je nach gewählten Dimensionen und Ausgangsmaterialien wird aus den hergestellten Materialverbundbahnen eine Gürtellage oder eine Karkasslage zum Einsatz beim Reifenaufbau gebildet.

Die Mischungsbahnen können wahlweise im rechten Winkel oder unter einem spitzen Winkel zur Längserstreckung der Festigkeitsträgerbahn zugeführt werden. Die Festigkeitsträger verlaufen in Längsrichtung der entstehenden Materialbahn, bei einer Zuführung im rechten Winkel quer zu den Mischungsstreifen, im Falle eines spitzen Winkels unter einem entsprechend spitzen Winkel zu den Mischungsstreifen, sodass auf letztere Weise schließlich Materialverbundbahnen gebildet werden können, die zum Aufbau von Gürtellagen in Fahrzeugluftreifen verwendet werden.

Die erwähnte Materialbahn bildet einen Zwischenschritt bei der Herstellung der beim Reifenaufbau verwendbaren Materialverbundbahn. Zur Herstellung dieser Materialverbundbahn wird die Materialbahn parallel zu den Materialstreifen derart in Materialverbundstücke geschnitten, dass die Materialverbundstücke durch Spleißen zu einer Materialverbundbahn zusammenfügbar sind, in welcher die Materialstreifen in Längsrichtung orientiert sind, wobei Materialstreifen gleicher Mischung durchgehend verlaufen.

Die erfindungsgemäßen Verfahren eröffnen zweckmäßige und in den einzelnen Verfahrensschritten auf automatisierte Weise ablaufende Möglichkeiten, Mischungsbahnen sowie Materialverbundbahnen aus Mischungsstreifen unterschiedlicher Kautschukmischungszusammensetzungen und unterschiedlicher Abmessungen auf einfache Weise herzustellen.

Die Mischungsbahn kann mittels eines Roller-Head-Aggregates oder eines Roller-Die-Aggregates mit mehreren Extrudern, entsprechend der Anzahl von Mischungsstreifen aus unterschiedlichen Kautschukmischungen, hergestellt werden.

Unter einem Roller-Head-Aggregat versteht man die Kombination eines Extruders oder mehrerer Extruder mit Breitspritzkopf und einem Zweiwalzenkalander. Ein Roller-Head-Aggregat bietet den Vorteil einer hohen Gleichmäßigkeit der Dicke der hergestellten Materialbahn über die volle Bahnbreite und einer hervorragenden Homogenität des ausgewalzten Materials. Ein Roller-Head-Aggregat gestattet auch die Herstellung von dünnen Mischungsbahnen großer Breite und kleiner Dicke, wie es beispielsweise für Mischungsbahnen für Gürtellagen und Karkasslagen eines Fahrzeugluftreifens mit einer Dicke von 0,5 mm bis 2 mm wichtig ist. Die Kautschukmischungen werden in den Extrudern plastifiziert und in den Roller-Head eingespeist. Aus diesem gelangen die Mischungen über die gesamte Arbeitsbreite des Kalanders direkt in den Walzenspalt. Diese direkte Zuführung vermeidet den sonst üblichen Rollwulst und das Entstehen von Lufteinschlüssen. Die an der Spritzdüse vorgeformte Mischungsplatte wird im Roller-Head auf die gewünschte Enddicke kalibriert. Unter einem Roller-Die-Aggregat wird die Kombination eines Extruders oder mehrerer Extruder mit einem Spritzkopf mit Rolle verstanden, wobei die Rolle Bestandteil des Kopfes ist, da sie die Mischungsbahn mitformt. Auch Roller-Die-Aggregate bieten den Vorteil, dass dünne Kautschukmischungsbahnen in hoher Genauigkeit hergestellt werden können. Die Kautschukmischungen werden unter niedrigem Druck in entsprechenden Positionen und ohne zusätzliche Temperaturbelastung in den formgebenden Spalt abgegeben. Infolge der Rollendrehung entstehen im Kopfbereich und im Ausformspalt Schleppwirkungen, die durch die Mischungshaftung auf der temperierten Walzenoberfläche bewirkt werden. Durch die Abstimmung der Walzentemperatur und der Umfangsgeschwindigkeit der Walze mit dem Extruderausstoß sowie der Abzugsgeschwindigkeit lassen sich Mischungsbahnen in hoher Genauigkeit herstellen.

Die hohe Genauigkeit der mit einem Roller-Head-Aggregat oder einem Roller-Die-Aggregat hergestellten Mischungsbahnen basiert unter anderem auch darauf, dass im Falle des Roller-Head-Aggregates dieses einen Breitspritzkopf mit einer schlitzförmigen Spritzdüse aufweist, deren Abmessungen an die Dicke und die Breite der herzustellenden Mischungsbahn angepasst sind oder anpassbar sind und im Falle der Verwendung eines Roller-Die-Aggregates darauf, dass dieses einen Spritzkopf mit einem zwischen der Rolle und dem Spritzkopf gebildeten schlitzförmigen Austrittsspalt aufweist, dessen Abmessungen an die Dicke und die Breite der herzustellenden Mischungsbahn anpassbar sind.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 ein Roller-Head-Aggregat mit einem Duplex-Extruder,
Fig. 2 ein Roller-Die-Aggregat mit einem Duplex-Extruder,
Fig. 3 und Fig. 3a die Herstellung einer gummierten Festigkeitsträgerbahn aus zwei Mischungsbahnen,
Fig. 4 eine Variante der Herstellung einer Mischungsbahn und
Fig. 5 einen radialen Teilschnitt durch einen Fahrzeugluftreifen für Personenkraftwagen.

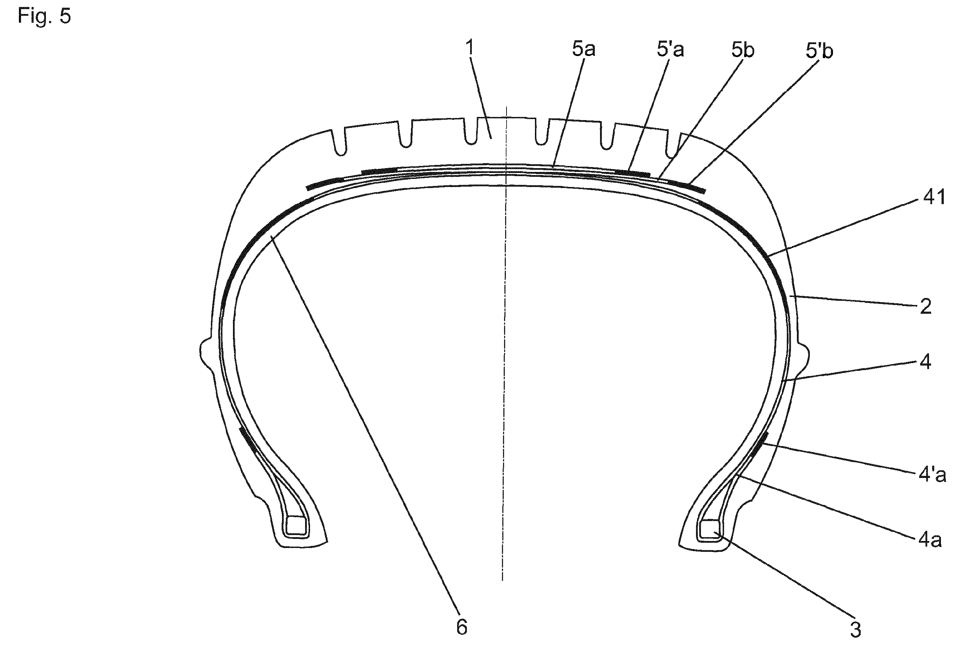

Der in Fig. 5 beispielhaft und schematisch gezeigte Radialluftreifen für Personenkraftwagen weist übliche Reifenbauteile auf, insbesondere einen profilierten Laufstreifen 1, Seitenwände 2, Wulstbereiche mit Wulstkernen 3, eine luftdichte Innenschicht 6, eine Karkasslage 4 und einen Gürtelverband mit zwei Gürtellagen 5a, 5b. Die Festigkeitsträger in der Karkasslage 4 sind in Gummi eingebettet und Bestandteile eines Gewebes. Die beiden freien, von axial innen nach axial außen um die Wulstkerne 3 geschlungenen Endabschnitte der Karkasslage 4 bilden Karkasshochschläge 4a. Die zwischen der Karkasslage 4 und dem Laufstreifen 1 in Umfangsrichtung verlaufenden Gürtellagen 5a, 5b bestehen aus in Gummi eingebetteten und in jeder Lage jeweils zueinander parallel verlaufenden Stahlkorden. Üblicherweise verlaufen die Stahlkorde in der einen Gürtellage 5a zu den Stahlkorden in der anderen Gürtellage 5b gekreuzt, der Winkel, den die Stahlkorde mit der Reifenumfangsrichtung einschließen, beträgt etwa in der Größenordnung von ± 15° bis ± 30°. Bei einem Radialluftreifen für Lastkraftwagen bzw. Schwerlastfahrzeuge (LKW-Reifen) sind im Gürtelverband üblicherweise vier Gürtellagen, ebenfalls aus in Gummi eingebetteten und in jeder Lage parallel zueinander verlaufenden Stahlkorden, vorgesehen. Die ein- oder mehrlagige Karkasslage in LKW-Reifen besteht üblicherweise aus in Gummi eingebetteten, zumindest im Wesentlichen in radialer Richtung verlaufenden Festigkeitsträgern aus Stahlkord. Gemäß dem Stand der Technik sind in PKW- und in LKW-Reifen die Gürtellagen und die Karkasslagen jeweils einheitlich ausgebildete Bauteile. Aus der EP 2 327 536 A1 ist es bereits bekannt, zumindest in einer der Gürtellagen und/oder einer der Karkasslagen einen oder mehrere in Reifenumfangsrichtung umlaufenden Abschnitt(e) konstanter Breite vorzusehen, dessen bzw. deren Einbettungsmischung sich von der Einbettungsmischung des/der benachbarten Abschnitte bzw. Abschnittes unterscheidet.

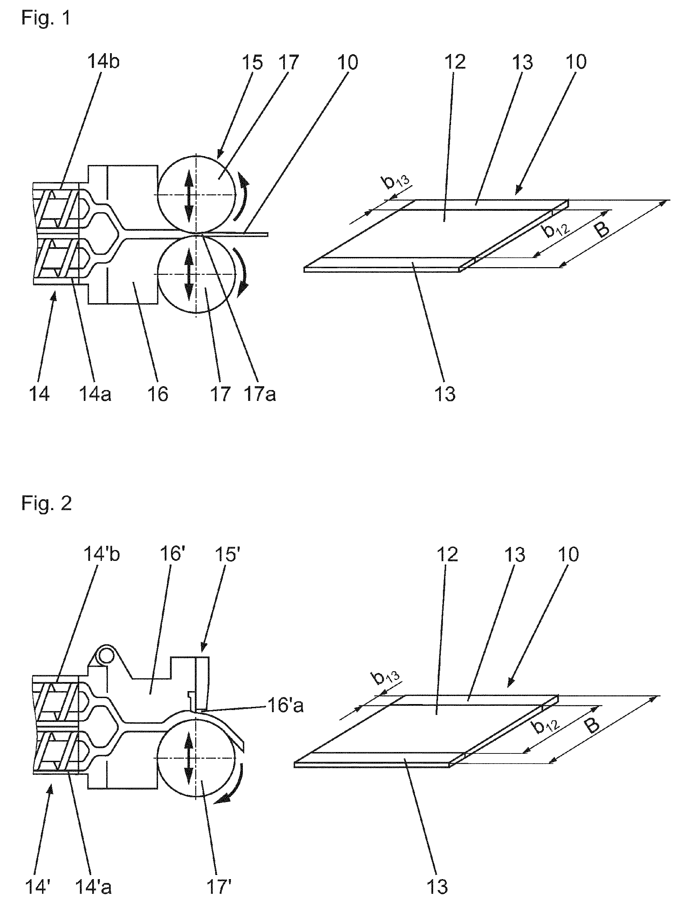

Fig. 5 zeigt beispielhaft Randabschnitte 5'a, 5'b der Gürtellagen 5a, 5b, Endabschnitte 4'a der Hochschläge 4a sowie Abschnitte 41 in den sogenannten Korbbogenbereichen der Karkasslage 4, welche aus speziellen Gummierungsmischungen hergestellt sind. Analoge Ausführungen dieser Bauteile sind auch bei LKW-Reifen möglich, wie es beispielsweise in Fig. 2 der EP 2 327 536 A1 gezeigt ist. Die Randabschnitte 5'a, 5'b der Gürtellagen 5a, 5b und die Endabschnitte 4'a der Karkasshochschläge 4a sind insbesondere aus sogenannten High-Performance-Mischungen hergestellt, dies sind Gummimischungen, die hinsichtlich relevanter Eigenschaften in diesen Abschnitten, wie beispielsweise Rissbeständigkeit, Einreißwiderstand und Ermüdungsbeständigkeit, optimiert sind. Die Abschnitte 41 in den Korbbogenbereichen weisen vor allem besonders penetrationsresistente Gummimischungen auf. High-Performance-Mischungen werden für LKW- und PKW-Reifen und für Gürtellagen und Karkasslagen jeweils unterschiedlich ausgelegt und unterscheiden sich auch von den penetrationsresistenten Mischungen der Korbbogenabschnitte 41. Die Einbettungsgummis außerhalb der erwähnten End- bzw. Randabschnitte 15a, 15b, 4'a und der Abschnitte 41 können aus kostengünstigeren Gummimischungen hergestellt werden, da sie bezüglich der erwähnten Eigenschaften in diesen Bereichen nicht optimiert sein müssen. Diese Mischungen sind nachfolgend als Standard-Mischungen bezeichnet.

Die aus einer High-Performance-Mischung hergestellten Abschnitte 5'a, 5'b, 4'a weisen jeweils eine konstante Breite, je nach Reifentyp zwischen 3 mm und 30 mm, auf. Die aus einer penetrationsresistenten Mischung hergestellten Abschnitte 41 in den Korbbogenbereichen erstrecken sich im Wesentlichen zwischen den Rändern der breitesten Gürtellage und der Stelle mit der größten Querschnittsbreite des Reifens, gegebenenfalls auch nur über einen Teil dieses Bereiches.

Im Folgenden wird die Herstellung eines Materialverbundes in der Form einer Bahn, beispielsweise für den Aufbau einer Karkasslage 4 mit besonderen Endabschnitten 4'a, aus zwei gleichen Mischungsbahnen 10 und einer Festigkeitsträgerbahn 11 erläutert. Dazu wird vorerst eine Mischungsbahn 10 mit einer Gesamtbreite B, bestehend aus einem Mischungsstreifen 12 einer Breite b₁₂ aus einer Standard-Mischung und zwei Randstreifen 13 der Breite b₁₃ aus einer High-Performance-Mischung, hergestellt. Fig. 1 und Fig. 2 zeigen jeweils einen Abschnitt der hergestellten Mischungsbahn 10. Gemäß der in Fig. 1 gezeigten Ausführungsform der Erfindung erfolgt die Herstellung der Mischungsbahn 10 mittels eines Roller-Head-Aggregates mit einem Duplex-Extruder 14 mit einem Roller-Head 15. Es ist grundsätzlich bekannt, Roller-Head-Aggregate in der kautschukverarbeitenden Industrie, insbesondere zur Herstellung von Halbfabrikaten bei der Fahrzeugluftreifenfertigung, beispielsweise von Laufstreifen, einzusetzen. Das in Fig. 1 gezeigte Aggregat weist neben weiteren nicht dargestellten Bestandteilen zwei Extruder 14a, 14b und einen Breitspritzkopf 16 mit einer schlitzförmigen Spritzdüse 16a auf, dessen Länge der Breite B der herzustellenden Mischungsbahn 10 und dessen Höhe der Stärke der herzustellenden Mischungsbahn 10 angepasst sind. In dem einen Extruder, beispielsweise dem Extruder 14a, wird eine plastifizierte Kautschukmischung gemäß der Standard-Mischung unter niedrigem Druck im Kopf 16 im mittleren Abschnitt der Spritzdüse 16a aus dem Spritzkopf 16 entlassen. Im zweiten Extruder 14b wird eine High-Performance-Mischung hergestellt, welche im Spritzkopf 16 aufgeteilt wird und an den seitlichen Abschnitten der Spritzdüse 16a unter niedrigem Druck nach außen tritt. Die Fließwege im Spritzkopf 16 sind derart ausgelegt, dass aus der Spritzdüse 16a im mittleren Abschnitt die Kautschukmischung für den Mischungsstreifen 12 und seitlich die Kautschukmischung für den Mischungsstreifen 13 austritt. Fig. 1 zeigt den an die Spritzdüse 16a unmittelbar anschließenden Roller-Head 15, einen Walzenkalander aus zwei Walzen 17, die in Drehbewegung versetzt werden, wobei die Drehrichtungen durch Pfeile angedeutet sind. Die aus der Spritzdüse 16a austretenden Kautschukmischungen treten unmittelbar in den Walzenspalt 17a ein und werden hier hinsichtlich ihrer erwünschten Stärke kalibriert bzw. feinjustiert. Aus dem Walzenspalt 17a tritt die Mischungsbahn 10, wie oben beschrieben, aus.

Fig. 2 zeigt eine alternative Herstellung der Mischungsbahn 10 mittels eines Roller-Die-Aggregates mit einem Duplex-Extruder 14' und einem Roller-Die 15' aus einem Spritzkopf 16' mit einer Rolle 17'. Vom Aggregat selbst sind neben dem Spritzkopf 16' zwei Extruder 14'a und 14'b angedeutet. Die temperierbare Rolle 17' bildet gemeinsam mit dem Kopf 16' den Austrittsspalt 16'a und ist über einen separaten Antrieb in Rotationsbewegung versetzbar. Die Rolle 17' begrenzt daher den Austrittsspalt 16'a von unten und ist gegenüber dem Kopf 16' verstellbar. Der Austrittsspalt 16'a weist eine Breite und Höhe auf, die an die Breite B und Dicke der herzustellenden Mischungsbahn 10 entsprechend angepasst sind. Durch ein entsprechendes Abstimmen von Rollentemperatur und Umfangsgeschwindigkeit der Rolle 17' mit dem Extruderausstoß und der Abzugsgeschwindigkeit lässt sich die Mischungsbahn 10 mit hoher Genauigkeit herstellen. Auch bei dieser Ausführungsvariante wird in dem einen Extruder, etwa im Extruder 14'a, die Standardmischung für den mittleren Mischungsstreifen 12 und im zweiten Extruder 14'b die High-Performance-Mischung für die Mischungsstreifen 13 plastifiziert und im Kopf 16' entsprechend zum Austrittsspalt 16'a transportiert. Die gemäß Fig. 1 oder Fig. 2 hergestellte Mischungsbahn 10 kann zu einer Rolle gewickelt und zwischengelagert werden.

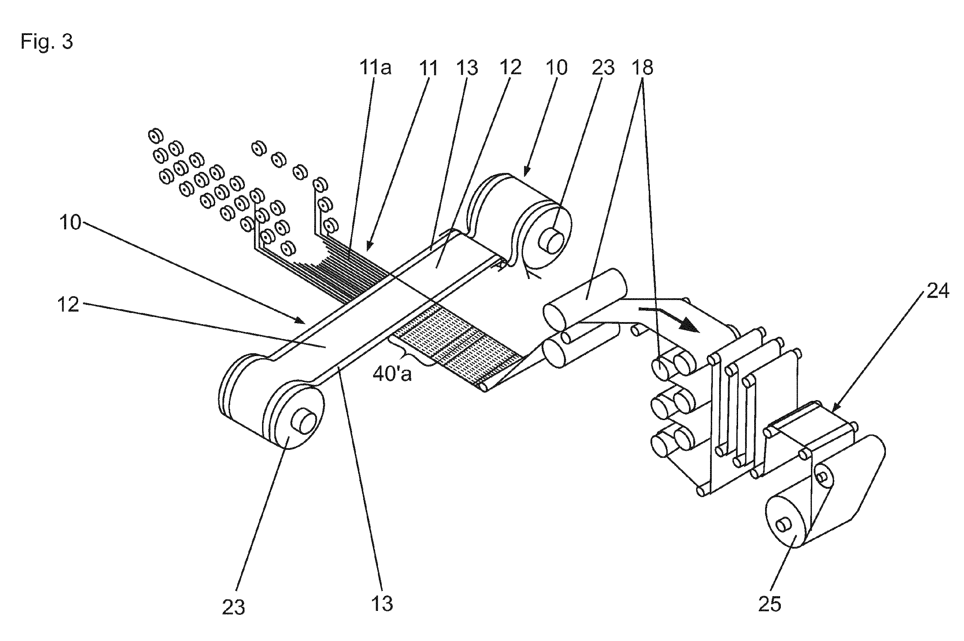

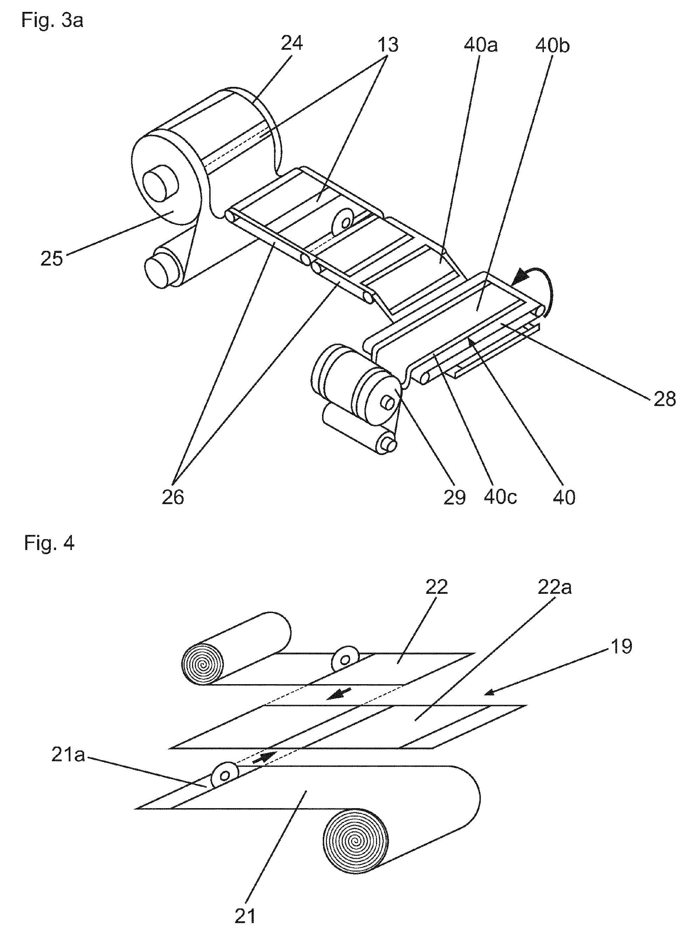

Fig. 3 zeigt eine erfindungsgemäße Möglichkeit der Herstellung einer Materialbahn 24 aus Mischungsbahnabschnitten 40'a von zwei Mischungsbahnen 10, wie sie beispielsweise und vorzugsweise mittels einer der in den Figuren 1 oder 2 gezeigten Aggregate hergestellt wurden. Fig. 3 illustriert dabei eine Möglichkeit des grundsätzlichen Ablaufs des Verfahrens, die die einzelnen Bauteile transportierenden und in Bewegung versetzbaren Einrichtungen sind nicht dargestellt. Auf einem Tisch oder dergleichen werden von den Rollen 23 zwei Mischungsbahnabschnitte 40'a unter Zwischenlegung einer Festigkeitsträgerbahn 11 zusammengefügt. Die Zuführrichtung der Festigkeitsträgerbahn 11 entspricht hier der Abtransportrichtung der gebildeten Materialbahn 24. Die Festigkeitsträgerbahn 11 besteht bei der gezeigten Ausführungsform aus einer Anzahl von parallel zueinander verlaufenden Stahlkorden 11a. Bei der in Fig. 3 gezeigten Ausführungsform werden die beiden Materialbahnen 10 parallel zueinander und überlappend im rechten Winkel zur Festigkeitsträgerbahn 11 bzw. zu den Stahlkorden 11a zugeführt. Dabei wird auf dem nicht gezeigten Tisch oder dergleichen ein Abschnitt der einen, hier rechts zugeführten Mischungsbahn 10 abgelegt, auf dieser wird ein Abschnitt der Festigkeitsträgerbahn 11 und anschließend ein Abschnitt der zweiten Mischungsbahn 10 positioniert. Die Mischungsstreifen 12 aus den Standardmischungen und die Mischungsstreifen 13 aus den High-Performance-Mischungen werden dabei möglichst exakt aufeinander gelegt. Nun wird der gebildete Überlappungsabschnitt der beiden Mischungsbahnen 10 seitlich der Festigkeitsträgerbahn 11 abgeschnitten. Die Festigkeitsträgerbahn 11 wird so viel weiter transportiert, dass unmittelbar an die Mischungsbahnabschnitte 40'a anschließend die Festigkeitsträgerbahn 11 wieder beidseitig mit Mischungsbahnabschnitten 40'a versehen wird. Dadurch entsteht eine Bahn aus Mischungsbahnabschnitten 40'a mit der zwischen ihnen befindlichen Festigkeitsträgerbahn 11, welche beispielsweise zwischen Rollen bzw. Walzen 18 eines Mehrwalzenkalanders zur Materialbahn 24 zusammengepresst und gleichzeitig weitertransportiert wird. Die gebildete Materialbahn 24 wird in bekannter Weise auf eine Rolle 25 aufgerollt.

Wie es Fig. 3a zeigt, wird aus der Materialbahn 24 eine Materialverbundbahn 40 erstellt. Die von der Rolle 25 abgerollte Materialbahn 24 wird auf Fördereinrichtungen 26 transportiert und mittels einer Schneideinrichtung 27 mittig durch die Mischungsstreifen 13 in Materialverbundstücke 40a geschnitten, welche auf einer im rechten Winkel zu den Fördereinrichtungen 26 positionierten weiteren Fördereinrichtung 28 gehoben und hier zur Materialverbundbahn 40 durch stumpfes Spleißen derart zusammengefügt werden, dass die Materialverbundbahn 40 in Längsrichtung einen mittleren Abschnitt 40b aufweist, in welchem die Stahlkorde 11a, die nicht gezeigt sind, in die Standard-Mischung eingebettet sind, und zwei Randabschnitten 40c, in welchen die Stahlkorde 11a in die High-Performance-Mischung eingebettet sind. Die nicht gezeigten eingebetteten Stahlkorde 11a verlaufen nun quer zur Längsrichtung der Materialverbundbahn 40. Die Materialverbundbahn 40 wird auf eine Rolle 29 aufgerollt und kann nun beim Reifenaufbau auf die auf einer Reifenaufbautrommel aufgebrachte Innenschichtplatte in entsprechender Länge aufgelegt werden und derart eine Karkasseinlage eines Reifens bilden. Die erforderlichen Abmessungen der Karkasslage werden bereits bei der Herstellung der Mischungsbahn 10 entsprechend berücksichtigt.

Auf analoge Weise können Materialverbundbahnen hergestellt werden, die Gürtellagen bilden. Nachdem in Gürtellagen die Stahlkorde unter einem Winkel zur Reifenumfangsrichtung verlaufen, werden die Mischungsbahnen 10 in Fig. 3 unter einem entsprechenden Winkel zueinander zugeführt, sodass die geschnittenen Mischungsbahnabschnitte 40'a Parallelogramme mit spitzen und stumpfen Winkeln bilden. Die Stahlkorde 11a verlaufen dann schließlich in der fertigen Materialverbundbahn unter dem entsprechenden Winkel zu den parallel verlaufenden seitlichen Randabschnitten 40c.

Die Herstellung der Mischungsbahn aus Mischungsbahnabschnitten und der Festigkeitsträgerbahn sowie der Materialverbundstücke und deren Zusammenfügen zu Materialverbundbahnen läuft im Idealfall automatisch oder nahezu automatisch und entsprechend programmgesteuert ab. Erwähnt sei ferner, dass es dem Fachmann bekannt ist, was eine High-Performance-Mischung gemäß einer oder mehrerer der oben erwähnten Eigenschaften aufweisen soll oder eine penetrationsresistente Mischung herzustellen bzw. auszulegen ist.

Bei einer weiteren, in Fig. 4 gezeigten Ausführungsvariante der Erfindung wird eine Mischungsbahn 19, beispielsweise für einen Materialverbund als Gürtellage, aus Querstreifen aus zwei Kautschukmischungen hergestellt. Ausgangsmaterialien für eine Gürtellage sind beispielsweise eine Kautschukmischungsbahn 21 aus einer High-Performance-Mischung und eine Kautschukmischungsbahn 22 aus einer Standardmischung. Die Kautschukmischungsbahnen 21, 22 können auf herkömmliche Weise, beispielsweise durch Kalandrieren oder mittels eines Roller-Head-Aggregates oder eines Roller-Die-Aggregates hergestellt werden. Für die weitere Verarbeitung der beiden
Kautschukmischungsbahnen 21, 22 werden herkömmliche Einrichtungen, wie Tische und Fördereinrichtungen, verwendet. Die Kautschukmischungsbahn 22 wird in Mischungsstreifen 22a geschnitten, deren Länge der vorher erwähnten Breite b₁₂ der Mischungstreifen 12 entspricht. Die zweite Kautschukmischungsbahn 21 aus der High-Performance-Mischung wird mittels einer Schneideeinrichtung in schmale Mischungsstreifen 21a geschnitten, deren Breite der doppelten Breite b₁₃ der beschriebenen Mischungsstreifen 13 entspricht. Zwischen den beiden Einrichtungen, wo der Schneidvorgang erfolgt, befindet sich eine Fördereinrichtung, beispielsweise ein Förderband, auf welche abwechselnd ein Mischungsstück 22a und ein Mischungsstreifen 21a durch stumpfes Spleißen miteinander verbunden und weiter transportiert werden. Dadurch entsteht die Bahn 19, welche abwechselnd aus einem Mischungsstreifen 21a und einem Mischungsbahnstück 22a zusammengesetzt ist und auf eine nicht gezeigte Rolle aufgerollt wird.

Zwei Mischungsbahnen 19 können gemeinsam mit einer Fertigkeitsträgerbahn zu einer Materialverbundbahn verbunden werden, beispielsweise gemäß Fig. 3 der EP 2 327 536 A1 unter Verwendung eines Vierwalzenkalanders. Die weitere Verarbeitung der entstehenden Materialverbundbahn - Schneiden und erneutes Zusammenfügen - kann gemäß Fig. 4 und Fig. 5 der EP 2 327 536 A1 erfolgen. Alternativ können analog zu Fig. 3 und 3a der gegenständlichen Patentanmeldung zwei Materialbahnen 19 mit einer Festigkeitsträgerbahn abschnittsweise verbunden, geschnitten und entsprechend weiter verarbeitet werden. Sämtliche Materialbahnen werden zueinander parallel zugeführt, die Festigkeitsträger alternativ unter einem spitzen Winkel zu den Materialbahnen 19.

Die Erfindung ist auf die dargestellten und beschriebenen Ausführungsformen nicht eingeschränkt. Insbesondere können mit den erfindungsgemäßen Verfahren auch Mischungsbahnen aus Mischungsstreifen mit drei oder mehr unterschiedlichen Kautschukmischungen erstellt werden. Dazu werden beispielsweise Roller-Head-Aggregate oder Roller-Die-Aggregate mit Mehrfach-Extrudern eingesetzt.

### Bezugsziffernliste

- 1: Laufstreifen
- 2: Seitenwand
- 3: Wulstkern
- 4: Karkasslage
- 4a: Hochschlag
- 4'a: Endabschnitt
- 5a: Gürtellage
- 5'a: Randabschnitt
- 5b: rtellage
- 5'b: Randabschnitt
- 6: Innenschicht
- 10: Mischungsbahn
- 11: Fertigkeitsträgerbahn
- 11a: Stahlkord
- 12: Mischungsstreifen
- 13: Mischungsstreifen
- 14: Duplex-Extruder
- 14a: Extruder
- 14'a: Extruder
- 14b: Extruder
- 14'b: Extruder
- 15: Roller-Head
- 15': Roller-Die
- 16: Breitspritzkopf
- 16': Spritzkopf
- 16a: Spritzdüse
- 16'a: Austrittsspalt
- 17: Walze
- 17': Rolle
- 17a: Walzenspalt
- 18: Walze
- 19: Mischungsbahn
- 21: Kautschukmischungsbahn
- 21a: Mischungsstreifen
- 22: Kautschukmischungsbahn
- 22a: Mischungsstreifen
- 23: Rolle
- 24: Bahn
- 25: Rolle
- 26: Fördereinrichtung
- 27: Schneideinrichtung
- 28: Fördereinrichtung
- 29: Rolle
- 40: Materialverbundbahn
- 40'a: Mischungsbahnabschnitt
- 40a: Material verbundstück
- 40b: mittlerer Abschnitt
- 40c: Randabschnitt
- 41: Abschnitt im Korbbogenbereich
- B: Breite der Mischungsbahn 10
- b₁₂: Breite des Mischungsstreifens 12
- b₁₃: Breite des Randstreifens 13

## Patentansprüche

1. Verfahren zur Herstellung einer Mischungsbahn (19), insbesondere zur Herstellung eines Festigkeitsträger beinhaltenden Materialverbundes für eine Gürtellage (5a, 5b) oder eine Karkasslage (4) eines Radialluftreifens, wobei sich die Mischungsbahn (19) aus mehreren im rechten oder unter einem spitzen Winkel zu ihrer Längsrichtung verlaufenden Mischungsstreifen (21 a, 22a) zusammensetzt, wobei zumindest einer der Mischungsstreifen (21a) aus einer ersten Kautschukmischung und zumindest ein weiterer Mischungsstreifen (22a) aus einer zweiten Kautschukmischung besteht, wobei die erste Kautschukmischung und die zweite Kautschukmischung unterschiedliche Zusammensetzungen aufweisen, **dadurch gekennzeichnet,**
**dass** eine erste Kautschukmischungsbahn (21) aus der ersten Kautschukmischung und eine zweite Kautschukmischungsbahn (22) gleicher Breite wie die erste Kautschukmischungsbahn (21) aus der zweiten Kautschukmischung hergestellt werden, jede Kautschukmischungsbahn (21, 22) quer oder unter einem für beide Kautschukmischungsbahnen (21, 22) gleich großem spitzen Winkel zu ihrer Längserstreckung in gleich breite Mischungsstreifen (21a, 22a) geschnitten wird, wobei die Mischungsstreifen (21a) aus der ersten Kautschukmischungsbahn (21) eine von der Breite der Mischungsstreifen (22a) aus der zweiten Kautschukmischungsbahn (22) abweichende Breite aufweisen, wobei anschließend abwechselnd ein Mischungsstreifen (21 a) aus der ersten Kautschukmischungsbahn (21) mit einem Mischungsstreifen (22a) aus der zweiten Kautschukmischungsbahn (22) durch stumpfes Spleißen verbunden und derart die Mischungsstreifen (21 a, 22a) miteinander zur Mischungsbahn (19) zusammengefügt werden.

2. Verfahren nach Anspruch 1, **dadurch gekennzeichnet, dass** die eine Kautschukmischungsbahn (21) an der einen und die zweite Kautschukmischungsbahn (22) an der zweiten Seite einer mittigen Fördereinrichtung zugeführt und in die Mischungsstreifen (21a, 22a) geschnitten werden, welche anschließend auf der mittigen Fördereinrichtung positioniert und zusammen gespleißt werden.

3. Verfahren zur Herstellung einer Materialbahn (24) zur Erstellung einer Materialverbundbahn (40) für eine Gürtellage (5a, 5b) oder eine Karkasslage (4) eines Radialluftreifens, aus zwei gleichen Mischungsbahnen (10) und einer zwischen diesen befindlichen Festigkeitsträgerbahn (11), wobei die beiden Mischungsbahnen (10) aus mehreren Mischungsstreifen (12, 13) bestehen, wobei zumindest einer der Mischungsstreifen (12) aus einer ersten Kautschukmischung und zumindest ein weiterer Mischungsstreifen (13) aus einer zweiten Kautschukmischung besteht, wobei die erste Kautschukmischung und die zweite Kautschukmischung unterschiedliche Zusammensetzungen aufweisen,
**dadurch gekennzeichnet,**
**dass** die Festigkeitsträgerbahn (11) abschnittsweise zwischen Abschnitten der beiden Mischungsbahnen (10) eingefügt wird, welche im rechten Winkel oder unter einem spitzen Winkel zur Längserstreckung der Festigkeitsträgerbahn (11), die eine Mischungsbahn oberhalb, die andere unterhalb Festigkeitsträgerbahn (11), überlappend zugeführt werden, derart, dass die aus gleichen Mischungen bestehenden Mischungsstreifen (12, 13) der beiden Mischungsbahnen (10) aufeinander liegen, wobei anschließend der gebildete Überlappungsabschnitt der beiden Mischungsbahnen (10) seitlich der Festigkeitsträgerbahn (11) als Mischungsbahnabschnitt (40'a) abgeschnitten wird, wobei anschließend die Festigkeitsträgerbahn (11) so viel weiter transportiert wird, dass unmittelbar an den gebildeten Mischungsbahnabschnitt (40'a) anschließend der nächste Mischungsbahnabschnitt (40'a) gebildet wird, wobei die derart entstehende Bahn aus der mit den Mischungsbahnabschnitten (40'a) belegten Festigkeitsträgerbahn (11) zusammengepresst und gleichzeitig weitertransportiert wird.

4. Verfahren nach Anspruch 3, **dadurch gekennzeichnet, dass** die mit den Mischungsbahnabschnitten (40'a) belegte Festigkeitsträgerbahn (11) auf einem Kalander oder dergleichen zur Materialbahn (24) kalandriert wird.

5. Verfahren nach Anspruch 3 oder 4, **dadurch gekennzeichnet, dass** die Materialbahn (24) parallel zu den Materialstreifen (12, 13) derart in Materialverbundstücke (40a) geschnitten wird, dass die Materialverbundstücke (40a) durch Spleißen zu einer Materialverbundbahn (40) zusammenfügbar sind, in welcher die Materialstreifen (12, 13) in Längsrichtung orientiert sind, wobei Materialstreifen (12, 13) gleicher Mischung durchgehend verlaufen.

6. Verfahren nach Anspruch 3, **dadurch gekennzeichnet, dass** die Mischungsbahn (10) mittels eines Roller-Head-Aggregates oder eines Roller-Die-Aggregates mit mehreren Extrudern (14a, 14b, 14'a, 14'b), entsprechend der Anzahl von Mischungsstreifen (12, 13) aus unterschiedlichen Kautschukmischungen, hergestellt wird.

7. Verfahren nach Anspruch 6, **dadurch gekennzeichnet, dass** das Roller-Head-Aggregat einen Breitspritzkopf (16) mit einer schlitzförmigen Spritzdüse (16a) aufweist, deren Abmessungen an die Dicke und die Breite (B) der herzustellenden Mischungsbahn (10) angepasst sind.

8. Verfahren nach Anspruch 3, **dadurch gekennzeichnet, dass** das Roller-Die-Aggregat einen Spritzkopf (16') mit einem zwischen der Rolle (17') und dem Spritzkopf (16') gebildeten schlitzförmigen Austrittsspalt (16'a) aufweist, dessen Abmessungen an die Dicke und die Breite (B) der herzustellenden Mischungsbahn (10) anpassbar sind.

## Claims

1. Method for producing a mixture web (19), in particular for producing a material composite, which comprises a reinforcement member, for a belt ply (5a, 5b) or a carcass ply (4) of a pneumatic radial tyre, wherein the mixture web (19) is made up of multiple mixture strips (21a, 22a) which run at right angles or at an acute angle with respect to the longitudinal direction of said mixture web, wherein at least one of the mixture strips (21a) is composed of a first rubber mixture and at least one further mixture strip (22a) is composed of a second rubber mixture, wherein the first rubber mixture and the second rubber mixture have different compositions,
**characterized**
**in that** a first rubber mixture web (21) composed of the first rubber mixture and a second rubber mixture web (22) of the same width as the first rubber mixture web (21) and composed of the second rubber mixture are produced, each rubber mixture web (21, 22) is cut transversely or at an acute angle with respect its longitudinal extent, said acute angle being of equal magnitude for both rubber mixture webs (21, 22), into mixture strips (21a, 22a) of equal width, wherein the mixture strips (21a) composed of the first rubber mixture web (21) have a width which differs from the width of the mixture strip (22a) composed of the second rubber mixture web (22), wherein, subsequently, a mixture strip (21a) composed of the first rubber mixture web (21) and a mixture strip (22a) composed of the second rubber mixture web (22) are connected by butt splicing in alternating fashion, and in this way, the mixture strips (21a, 22a) are joined together to form the mixture web (19).

2. Method according to Claim 1, **characterized in that** one rubber mixture web (21) is supplied at one side, and the second rubber mixture web (22) is supplied at the other side, to a central delivery device, and said rubber mixture webs are cut into the mixture strips (21a, 22a), which are subsequently positioned on the central delivery device and spliced together.

3. Method for producing a material web (24) for creating a material composite web (40) for a belt ply (5a, 5b) or a carcass ply (4) of a pneumatic radial tyre, from two identical mixture webs (10) and a reinforcement member web (11) situated between said mixture webs, wherein the two mixture webs (10) are composed of multiple mixture strips (12, 13), wherein at least one of the mixture strips (12) is composed of a first rubber mixture and at least one further mixture strip (13) is composed of a second rubber mixture, wherein the first rubber mixture and the second rubber mixture have different compositions,
**characterized**
**in that** the reinforcement member web (11) is joined, in sections, between sections of the two mixture webs (10) which, at right angles or at an acute angle with respect to the longitudinal extent of the reinforcement member web (11), and with one mixture web above and the other below the reinforcement member web (11), are supplied in overlapping fashion in such a way that the mixture strips (12, 13), which are composed of identical mixtures, of the two mixture webs (10) lie one on top of the other, wherein subsequently, the overlap section of the two mixture webs (10) that is thus formed is cut off, laterally with respect to the reinforcement member web (11), as a mixture web section (40'a), wherein, subsequently, the reinforcement member web (11) is transported onward to such an extent that the next mixture web section (40'a) is formed so as to immediately adjoin the former formed mixture web section (40'a), wherein the thus created web composed of the reinforcement member web (11) lined with the mixture web sections (40'a) is pressed together and simultaneously transported onward.

4. Method according to Claim 3, **characterized in that** the reinforcement member web (11) lined with the mixture web sections (40'a) is calendered on a calender or the like to form the material web (24).

5. Method according to Claim 3 or 4, **characterized in that** the material web (24) is cut, parallel to the material strips (12, 13), into material composite pieces (40a) such that the material composite pieces (40a) can be joined together by splicing to form a material composite web (40) in which the material strips (12, 13) are oriented in the longitudinal direction, wherein material strips (12, 13) of identical mixture run in continuous fashion.

6. Method according to Claim 3, **characterized in that** the mixture web (10) is produced by way of a roller-head assembly or a roller-die assembly with multiple extruders (14a, 14b, 14'a, 14'b) corresponding to the number of mixture strips (12, 13) composed of different rubber mixtures.

7. Method according to Claim 6, **characterized in that** the roller head assembly has a wide spray head (16) with a slot-like spray nozzle (16a), the dimensions of which are adapted to the thickness and the width (B) of the mixture web (10) to be produced.

8. Method according to Claim 3, **characterized in that** the roller-die assembly has an extrusion head (16') with a slot-like discharge gap (16'a) formed between the roller (17') and the extrusion head (16'), the dimensions of which discharge gap are adaptable to the thickness and the width (B) of the mixture web (10) to be produced.

## Revendications

1. Procédé de fabrication d'une bande de mélange (19), en particulier pour la fabrication d'un composite de matière contenant des éléments de résistance pour une couche de ceinture (5a, 5b) ou une couche de carcasse (4) d'un pneu radial, dans lequel la bande de mélange (19) se compose de plusieurs rubans de mélange (21a, 22a) s'étendant sous un angle droit ou aigu par rapport à sa direction longitudinale, dans lequel au moins un des rubans de mélange (21a) se compose d'un premier mélange de caoutchouc et au moins un autre ruban de mélange (22a) se compose d'un deuxième mélange de caoutchouc, dans lequel le premier mélange de caoutchouc et le deuxième mélange de caoutchouc présentent des compositions différentes, **caractérisé en ce que** l'on fabrique une première bande de mélange de caoutchouc (21) avec le premier mélange de caoutchouc et une deuxième bande de mélange de caoutchouc (22) de même largeur que la première bande de mélange de caoutchouc (21) avec le deuxième mélange de caoutchouc, on découpe chaque bande de mélange de caoutchouc (21, 22) transversalement ou sous un angle aigu de même valeur pour les deux bandes de mélange de caoutchouc (21, 22) par rapport à leur extension longitudinale en rubans de mélange de même largeur (21a, 22a), dans lequel les rubans de mélange (21a) de la première bande de mélange de caoutchouc (21) présentent une largeur s'écartant de la largeur des rubans de mélange (22a) de la deuxième bande de mélange de caoutchouc (22), dans lequel on assemble ensuite en alternance, par épissage bout à bout, un ruban de mélange (21a) de la première bande de mélange de caoutchouc (21) avec un ruban de mélange (22a) de la deuxième bande de mélange de caoutchouc (22) et on réunit ainsi les rubans de mélange (21a, 22a) l'un à l'autre en une bande de mélange (19).

2. Procédé selon la revendication 1, **caractérisé en ce que** l'on envoie ladite première bande de mélange de caoutchouc (21) au premier côté et ladite deuxième bande de mélange de caoutchouc (22) au deuxième côté d'un dispositif de transport central et on les découpe en des rubans de mélange (21a, 22a), qui sont ensuite positionnés sur le dispositif de transport central et épissés les uns aux autres.

3. Procédé de fabrication d'une bande de matière (24) pour la construction d'une bande composite de matière (40) pour une couche de ceinture (5a, 5b) ou une couche de carcasse (4) d'un pneu radial, à partir de deux bandes de mélange identiques (10) et d'une bande d'éléments de résistance (11) se trouvant entre celles-ci, dans lequel les deux bandes de mélange (10) se composent de plusieurs rubans de mélange (12, 13), dans lequel au moins un des rubans de mélange (12) se compose d'un premier mélange de caoutchouc et au moins un autre ruban de mélange (13) se compose d'un deuxième mélange de caoutchouc, dans lequel le premier mélange de caoutchouc et le deuxième mélange de caoutchouc présentent des compositions différentes, **caractérisé en ce que** l'on insère la bande d'éléments de résistance (11) par parties entre des parties des deux bandes de mélange (10), qui sont fournies avec recouvrement, sous un angle droit ou sous un angle aigu par rapport à l'extension longitudinale de la bande d'éléments de résistance (11), la première au-dessus, l'autre en dessous de la bande d'éléments de résistance (11), de telle manière que les rubans de mélange (12, 13) composés des mêmes mélanges des deux bandes de mélange (10) soient placés l'un sur l'autre, dans lequel on découpe ensuite la partie à recouvrement formée des deux bandes de mélange (10) latéralement à la bande d'éléments de résistance (11) comme partie de bande de mélange (40'a), dans lequel on transporte ensuite la bande d'éléments de résistance (11) à une distance telle que la partie de mélange suivante (40'a) soit formée directement sur la partie de bande de mélange formée (40'a), dans lequel on comprime la bande ainsi créée composée de la bande d'éléments de résistance (11) garnie avec les parties de bande de mélange (40'a) et on l'évacue simultanément.

4. Procédé selon la revendication 3, **caractérisé en ce que** la bande d'éléments de résistance (11) garnie avec les parties de bande de mélange (40'a) est calandrée en une bande de matière (24) sur une calandre ou analogue.

5. Procédé selon la revendication 3 ou 4, **caractérisé en ce que** l'on coupe la bande de matière (24) parallèlement aux rubans de matière (12, 13) en pièces composites de matière (40a), de telle manière que les pièces composites de matière (40a) puissent être réunies par épissage en une bande composite de matière (40), dans laquelle les rubans de matière (12, 13) sont orientés en direction longitudinale, dans lequel des rubans de matière (12, 13) du même mélange s'étendent de façon continue.

6. Procédé selon la revendication 3, **caractérisé en ce que** l'on fabrique la bande de mélange (10) au moyen d'un groupe Roller-Head ou d'un groupe Roller-Die avec plusieurs extrudeuses (14a, 14b, 14'a, 14'b), correspondant à un nombre de rubans de mélange (12, 13) en mélanges de caoutchouc différents.

7. Procédé selon la revendication 6, **caractérisé en ce que** le groupe Roller-Head présente une tête de projection large (16) avec une buse de projection en forme de fente (16a), dont les dimensions sont adaptées à l'épaisseur et à la largeur (B) de la bande de mélange à fabriquer (10).

8. Procédé selon la revendication 3, **caractérisé en ce que** le groupe Roller-Die présente une tête de projection (16') avec une fente de sortie (16'a) en forme de fente formée entre le rouleau (17') et la tête de projection (16'), dont les dimensions peuvent être adaptées à l'épaisseur et à la largeur (B) de la bande de mélange à fabriquer (10).
